# EUROPEAN PATENT SPECIFICATION

(11) **EP 3 702 153 B1**
(45) Date of publication and mention of the grant of the patent: **21.05.2025**
(21) Application number: 20159754.9
(22) Date of filing: 27.02.2020
(51) Int. Cl.: B32B 27/34, B32B 1/08, B32B 27/08, B32B 27/18, B32B 27/30, B32B 27/32, B65D 88/16, C08L 77/02

(54) **LINER FILM**
AUSKLEIDUNGSFILM
FILM DE REVÊTEMENT

(30) Priority: 01.03.2019 EP 19160331
(43) Date of publication of application: 02.09.2020
(73) Proprietor: Flexopack S.A., 194 00 Koropi (GR)
(72) Inventor: GINOSATIS, Dimitris, 19400 Koropi Attica (GR)
(74) Representative: Isarpatent

(56) References cited:
- EP-A1- 3 216 599
- WO-A2-2010/009245
- US-A1- 2007 201 774
- US-A1- 2007 237 433
- US-A1- 2011 220 534

## Description

The invention relates to a multilayer film having a thickness of 50 to 200 microns, comprising polyamides and polyolefins.

### BACKGROUND

Plastic containers have been increasingly used in packaging applications, such as food packaging. A typical plastic container often used for bulk packaging of food (e.g. powdery food, coffee, cocoa, nuts) is called FIBC (=flexible intermediate bulk container). This type of container often is a woven polyethylene or polypropylene.

In the inside or outside of the woven material, another plastic liner is often used. This liner is made of a monolayer or multilayer film which comprises polymer materials. There are different types of adherence of this liner to the outer woven liner as seen in the prior art documents e.g. US 6,374,579 B1.

In the case of multilayer film, the different layers offer different advantages to the final applications. The inside layer (=the layer coming into direct contact with the food packed) is often formulated to allow very good sealing, thus protecting the existence of leakers that would be detrimental for the packed product. Other layers may comprise abuse resistant polymers to increase the mechanical strength of the material.

In case of oxygen sensitive food materials, at least one layer of the multilayer construction comprises material which is impermeable to oxygen. As well known in the art, such materials are often polyamides, PVDC or EVOH.

It is very often the case that the multilayer film is in "gusseted tube" configuration. The reason is that this configuration is more practical for bulk filling, transport and unloading versus a simple tube. Gussets are produced in line with the process by the use of two "pleating constructions" (often wooden, plastic or metal) which the film follows during on line processing. As these multilayer tube materials are often produced with the "hot blown film" method which often involves rotation of the collapsing frame and of the gusset equipment, a common problem is that the creases are not present continuously but periodically following the rotation and this increases the scrap and lowers the efficiency of the operation. There are cases where the creases are so often that the tube cannot be made into a gusset efficiently.

It is generally known in the art that less stiff polymers e.g. LDPE have better gussetability versus stiffer ones like HDPE. It is believed that the material must be softer and more pliable in order to form efficiently a gusset during the production process. High barrier materials such as EVOH or polyamide are generally considered to make the gusseting process even more difficult as they are usually stiffer than polyolefins.

There is a need to improve the "gussetability" of the plastic structure i.e. to find materials pliable enough and with enough bubble stability to produce gussets with no creases in the commonly used thickness range of 50-200 microns without sacrificing the oxygen barrier properties of the plastic film.

Another common requirement of the film used as interior film for FIBC bulk container is the need for excellent "flex crack resistance". As explained in WO 2007/121590, flex cracking may occur during shipping and handling of liners where flowable materials are packed. As further explained in the above reference, the Gelbo flex testing is used for the evaluation of flex crack. However, this reference does not refer to oxygen barrier polymers which in general have much worse flex crack properties than polyolefins.

There has been in the prior art efforts to improve the flex crack of films. For example EP 0 151 462 A2 teaches a proper film construction to improve flex cracking of barrier polymers such as EVOH.

EP 3 216 599 A1 relates to gusseted plastic film with a thickness of 50 to 200 microns, comprising a polyolefin homopolymer or copolymer, a polyether copolymer and a layer comprising oxygen barrier polymer. EP 3 216 599 A1 does not describe a multilayer film comprises an outer layer comprising a blend of two or more polyamides and an outer layer further comprising polyamide-based slip and/or anti-block additives.

US 2011/220534 A1 relates to the use of composite foils based on polyvinyl alcohols as packaging material for polymers susceptible to oxidation. US 2011/220534 A1 does neither disclose a film with an outer layer comprising a blend of two or more polyamides nor the use of slip and/or anti-block additives in the outer layer or an inner layer comprising a blend of an ethylene alpha-olefin copolymer and a polyether copolymer.

US 2007/237433 A1 and US 2007/201774 A1 relate to flexible liners for use in bulk containers such as those used in flexible intermediate bulk container ("FIBC") systems or bag-in-box container systems, and disclose a nylon coextruded or laminated to a polyethylene or polypropylene layer. US 2007/237433 A1 and US 2007/201774 A1 do neither disclose a film with an outer layer comprising a blend of two or more polyamides nor the use of slip and/or anti-block additives in the outer layer or an inner layer comprising a blend of an ethylene alpha-olefin copolymer and a polyether copolymer.

WO 2010/009245 A2 relates to packages for moisture containing products, such as cheese, including a polyamide layer, an ethylene vinyl alcohol (EVOH) layer, a sealant layer, and a moisture barrier layer located between the sealant layer and the polyamide and EVOH layers. WO 2010/009245 A2 does not disclose the use of a polyamide-based slip/anti-block additive in the outer layer nor an inner layer comprising a blend of ethylene alpha-olefin copolymer and polyether copolymer.

However, there is still a need in the market to improve further the gussetability and the flex crack of films that are used as FIBC liners.

In the market films with the structure
Polyolefin (outer layer) / tie layer / Polyamide / EVOH / tie layer / Polyolefin / Polyolefin (inner layer)
are sometimes used.

The present inventor experienced that such films are quite difficult to produce stably due to poor gussetability and poor flex crack properties. However, the present inventor unexpectedly found out that if the outer layer comprises polyamide, gussetability and flex crack resistance improve substantially.

### SUMMARY OF THE INVENTION

According to the invention a very suitable film for the FIBC liner has a thickness of 50 to 200 microns and comprises
a polyolefin polymer.
an outer layer comprising polyamide, and
an inner layer comprising a blend of ethylene alpha olefin copolymers and polyether copolymers,
where the outer layer comprises a blend of two or more polyamides and the outer layer further comprises polyamide based slip and/or polyamide based antiblock additives.

Optionally the film comprises another layer comprising an oxygen barrier polymer

### DEFINITIONS

In this application the following definitions are used:
Unless otherwise indicated all percentages used herein refer to percentage by weight.

The term "gusset" is interpreted as well known in the art. That is a plastic tubular film having a partial 4 fold configuration.

The term "film" refers to a flat or tubular flexible structure of thermoplastic material.

The term "FIBC liner" refers to a plastic film slit, sealed and cut to the proper dimensions and used inside a "flexible intermediate bulk container" (FIBC) for extra protection of the bulk cargo.

The term "heat shrinkable" refers to a film that shrinks at least 10% in at least one of the longitudinal and transverse directions when heated at 90°C for 4 seconds. The shrinkability is measured according to ASTM 2732.

The phrase "longitudinal direction" or "machine direction" herein abbreviated "MD" refers to a direction along the length of the film.

The phrase "outer layer" refers to the film layer which comes in immediate contact with the outside environment (atmosphere). In the FIBC application, the outer layer is in contact with the outside woven construction of PP or PE.

The phrase "inner layer" refers to the film layer that comes in direct contact with the product packed. This is also called "sealing layer" as this layer must be hermetically sealed in order to protect the product from ingress of air.

The phrase "intermediate layer" refers to any layer of the film that is neither outer nor inner layer. A film may comprise more than one intermediate layers.

As used herein, the term "homopolymer" refers to a polymer resulting from polymerization of a single monomer.

As used herein, the term "copolymer" refers to a polymer resulting from polymerization of at least two different polymers.

As used herein, the term "polymer" includes both above types.

As used herein, the term "polyolefin" includes all the polymers produced by polymerization of olefins. Polyethylene, polypropylene, polybutylene and other products are included in this general category.

As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low density polyethylene (LLDPE), medium density polyethylene (MDPE), very low density polyethylene (VLDPE), ultra-low density polyethylene (ULDPE), metallocene catalyzed polymers and polyethylene plastomers and elastomers.

In these cases the alpha olefin can be propene, butene, hexene, octene etc. as known in the art.

As used herein the term "homogeneous ethylene alpha olefin copolymers" refer to ethylene alpha olefin copolymers having a molecular weight distribution less than 2.7 as measured by GPC. Typical examples of these polymers are AFFINITY from DOW or Exact from Exxon.

As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the phrase "ethylene methacrylate copolymers" refers to copolymers of ethylene and methacrylate monomer. The monomer content is less than 40% per weight. The abbreviation used is EMA.

As used herein the phrase "ethylene vinyl acetate copolymer" refers to copolymers of ethylene and vinyl acetate. Abbreviation used is EVA.

As used herein the term "barrier polymers" or "oxygen barrier polymers" refer to polymers that have an oxygen permeability less than 150 cm³/m²*atm*24h per 10 microns of polymer. The measurement is made as per ASTM F 1927 at 23°C, 75% RH.

As used herein, the term EVOH refers to saponified products of ethylene vinyl ester copolymers. The ethylene content is typically in the range of 25 to 50% per mol.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein, the term "polyamides" includes aliphatic homo- or co-polyamides commonly referred to as e.g. polyamide 6, polyamide 69, polyamide 610, polyamide 612, polyamide 11, polyamide 12, polyamide 6/12, polyamide 6/66, polyamide 66/610, modifications thereof and blends thereof. Said term also includes crystalline or partially crystalline, aromatic or partially aromatic, polyamides, such as polyamide 6I/6T or polyamide MXD6. Said term also includes polyamides made of combination of three or more monomers, such as polyamide 6/66/12, 6/66/6I, 6/66/11 and others. The term also includes polyamide alloys such as Orgalloy from Arkema.

As used herein the term "ionomer" refers to ethylene-acid copolymers which have been neutralized by metals such as sodium, zinc, lithium or others.

The acid used is usually methacrylic or acrylic acid.

As used herein, the term "ethylene acid copolymer" refers to copolymers of ethylene with acid, most usually methacrylic or acrylic acid.

As used herein, the term "polyester" includes crystalline polymers, amorphous polymers and polyester elastomers. Common polyesters are crystalline PET (polyethylene terephthalate), amorphous PET, PETG (glycol modified polyethylene terephthalate), PBT (polybutylene terephthalate), PTT (polytrimethylene terephthalate), PBN (polybutylene naphthalate), PEN (polyethylene naphthalate). Other polyester materials are also included in the above definition.

As used herein the term "polybutylene" refers to butene-1 homopolymers and copolymers. Useful copolymers comprise ethylene mer units. Ethylene content should be generally less than 50%per weight.

### DETAILED DESCRIPTION OF THE INVENTION

### FILM CONSTRUCTION

Preferably the film comprises 5 to 15 layers, more preferably 7 to 12 layers.

A typical example of the film construction in 7 layer mode is:
Outer layer / tie layer / tie layer / barrier layer / tie layer / intermediate layer / inner layer
   or
Outer layer / tie layer / barrier layer / tie layer / intermediate layer / intermediate layer / inner layer

A typical example of the film construction in 9 layer mode is
Outer layer / tie layer 1 / intermediate layer 1 / tie layer 2 / barrier layer / tie layer 3 / intermediate layer 2 / intermediate layer 3 / inner layer
The film is preferably produced by the hot blown film method and is not heat shrinkable. The film is preferably gusseted.

### Barrier layer(s)

The film in a preferable version contains high oxygen barrier materials so that it protects the components of the pack from the detrimental effect of oxygen ingress. EVOH is a preferred option but also polyamide and PVDC are viable alternatives. The EVOH is preferably 24 to 50% ethylene per mol, more preferably 27 to 48% ethylene per mol.

In another preferred version of the invention, the barrier polymer is polyamide. Most suitable polyamides are polyamide 6 and copolymer 6/66 or 6/12.

### Intermediate layer(s)

Preferably, the intermediate layers comprise different polyolefins. Preferred polyolefins are ethylene alpha olefin copolymers, where alpha olefin is preferably butene, hexene or octene.

In a preferred version the ethylene alpha olefin copolymers are random copolymers with densities from 0.870 g/cm³ up to 0.960 g/cm³. In a further preferred version the molecular weight distribution of the ethylene alpha olefin copolymers are less than 10, preferably less than 5, preferably less than 3.

### Tie layer(s)

As well known in the art, there is no natural adhesion between polyolefins and oxygen barrier polymers such as EVOH.

Suitable materials for the tie layer process include maleic anhydride modified EVA, maleic anhydride modified polyethylene, maleic anhydride modified EMA, maleic anhydride modified elastomer, partially saponified EVA copolymer and polyurethane elastomer.

In the tie layers also polyamides can be used, given the strong natural adhesion between polyamide and EVOH. Preferred polyamides are polyamide 6, polyamide 6/66 and polyamide 6/12.

### Outer layer

The outer layer of the film comprises polyamide. Polyamide 6 and polyamide 6/66 are preferred.

The outer layer comprises a blend of two or more different polyamides. In a preferred version, the outer layer comprises an amorphous polyamide.

The outer layer further comprises polyamide based slip and/or polyamide based antiblock additives.

In a preferred version of the invention, the outer layer comprises at least 100 ppm (parts per million) per mass of an amide lubricant such as oleamide, erucamide, stearamide, oleyl palmitamide and so on. Preferable amide is strearamide.

The outer layer may also comprise antistatic additives or polymers. These can offer either "permanent" antistatic performance, where there is no deterioration of the antistatic properties for at least 6 months or "temporary" antistatic performance. In a preferred version of the invention, the outer layer comprises a "permanent" antistatic.

### Inner layer

The inner layer of the film would be able to seal the film to itself to secure that no leakers and oxygen influx is allowed. This could be detrimental to the product packed.

Suitable materials for the inner layer include different polyolefins, preferable ethylene alpha olefin copolymers, low density polyethylene, polypropylene or polyether copolymers.

The inner layer comprises a blend of ethylene alpha olefin copolymers and polyether copolymers. Preferred polyether copolymers are materials such as polyamide-polyether copolymers, polyolefin-polyether copolymers, polyester-polyether copolymers and the like. Typical materials are Irgastat from BASF, Pebax from Arkema, Pelestat from Sanyo and the like.

In general, the above layers may comprise further well known in the art additives such as antiblock, slip, antifog, polymer processing enhancers and others.

### Reference Example 1 (not forming part of the invention)

From a commercial hot blown film line the following film was produced

| | |
|---|---|
| *Outer layer, | thickness 15 microns |
| *Tie layer 1, | thickness 8 microns |
| *Tie layer 2, | thickness 8 microns |
| *EVOH 38%, | thickness 8 microns |
| *Tie layer 3, | thickness 8 microns |
| *Intermediate layer, | thickness 30 microns |
| *Inner layer, | thickness 23 microns. |

The outer layer was a blend of
96% polyamide 6 + 2% polyamide based slip masterbatch + 2% polyamide based antiblock masterbatch, where the polyamide 6 was Ultramid B40LN from BASF
Tie layer 1 was a blend of
70% ethylene hexene copolymer + 30% maleic anhydride modified LLDPE.

The density of ethylene hexene copolymer was 0.919 while MFI was 1 under 190°C/2.16 kilos.

The maleic anhydride modified LLDPE was Bynel 41E710 from Dow.

Tie layers 2 and 3 were maleic anhydride LLDPE based copolymer (Admer from Mitsui). EVOH 38% is EVOH with 38% ethylene per mol.

Intermediate layer comprised a blend of 70% octene based LLDPE + 28% LDPE + 2% polyethylene based slip and antiblock masterbatch. The octene based LLDPE had a density of 0.918 g/cm³ and an MFI of 1 measured at 190°C, 2.16 kg. The LDPE had a density of 0.924 g/cm³ and an MFI of 0.7 measured at 190°C, 2.16 kg.

Inner layer was a blend of
89% metallocene LLDPE + 10% LDPE + 1% slip antiblock masterbatch Metallocene LLDPE had a density of 0.918 while MFI was 1 under 190°C/2.16 kg.

LDPE was the same as the LDPE used in the intermediate layer as above.

### Reference Example 2 (not forming part of the invention)

In the case of example 2 the polyamide 6 used in the outer layer was replaced by a polyamide 6/66 of same viscosity (Ultramid C40L from BASF).

### Reference Example 3 (not forming part of the invention)

In this example, the EVOH 38% (38% ethylene per mol) was replaced by EVOH 32% (32% ethylene per mol) which is stiffer and thought to be more difficult to form gusset.

Further, the Tie layer 2 of this example is 100% polyamide 6/66 (Ultramid C40L from BASF).

### Comparative Example

The comparative example was produced according to the structure already used in the market of
Polyolefin (outer layer) / tie layer / Polyamide / EVOH / tie layer / Polyolefin / Polyolefin (inner layer)
Therefore, the following film was produced

| | |
|---|---|
| *Outer layer, | thickness 15 microns |
| *Tie layer 1, | thickness 8 microns |
| *Tie layer 2, | thickness 8 microns |
| *EVOH 38%, | thickness 8 microns |
| *Tie layer 3, | thickness 8 microns |
| *Intermediate layer, | thickness 30 microns |
| *Inner layer, | thickness 23 microns. |

Outer layer was a blend of
66% of octene based LLDPE + 30% LDPE + 4% polyethylene based slip/antiblock masterbatch.

The octene based LLDPE had a density of 0.918 g/cm³ and an MFI of 1 measured at 190°C, 2.16 kg.

The LDPE had a density of 0.924 g/cm³ and an MFI of 0.7

Tie layer 1 was a blend of
70% ethylene hexene copolymer + 30% maleic anhydride modified LLDPE
The density of ethylene hexene copolymer was 0.919 while MFI was 1 under 190°C/2.16 kilos. In general, the Tie layer 1 is the same as in example 1.

Tie layer 2 was 96% polyamide 6 + 2% polyamide based slip masterbatch + 2% polyamide based antiblock masterbatch, where the polyamide 6 was Ultramid B40LN from BASF.

Tie layer 3 was maleic anhydride LLDPE based copolymer same as in example 1.

EVOH 38% is EVOH with 38% ethylene per mol.

Intermediate layer comprised a blend of 70% octene based LLDPE + 28% LDPE + 2% polyethylene based slip and antiblock masterbatch. The octene based LLDPE had a density of 0.918 g/cm³ and an MFI of 1 measured at 190°C, 2.16 kg. The LDPE had a density of 0.924 g/cm³ and an MFI of 0.7 measured at 190°C, 2.16 kg. The structure of this layer is same as in example 1.

Inner layer was a blend of
89% metallocene LLDPE + 10% LDPE + 1% slip antiblock masterbatch
Metallocene LLDPE had a density of 0.918 while MFI was 1 under 190°C/2.16 kg.

LDPE was the same as the LDPE used in the intermediate layer as above. The structure of this layer is same as in example 1.

### METHOD OF GUSSETABILITY EVALUATION

On the tower of the blown film line two gusset boards were mounted as known in the art. Each example structure ran in production for 2 hours and the number of creases was monitored. As the creases tend to come along in timely intervals, "creasing instances" were recorded, meaning any incident was recorded when more than 3 creases passed from the nip section of the blown film line.

The rotation speed was kept constant during the experiment.

### RESULTS OF GUSSETABILITY TESTING

Reference Example 1 (not forming part of the invention) presented 2 creasing incident during the two hours production.

Reference Example 2 (not forming part of the invention) presented 1 creasing incidents.

Reference Example 3 (not forming part of the invention) presented 4 incidents.

The comparative example presented 8 incidents during the two hours production.

### FLEX CRACK RESISTANCE

The flex crack resistance was measured according to MIL-B-131 D using Gelbo Flex Tester.

The flexing action consists of a twisting motion at a speed of 47 cycles per minute. The sample is flexed for 7 minutes and then flex failure is determined by measuring the number of pinholes formed in the film. The results are averages of testing of 10 specimens of each film.

The higher the number of pinholes the less flex crack resistant the film is. Examples 1-3 are Reference Examples 1-3, not forming part of the invention.

| **FILM RFERENCE** | **NUMBER OF PINHOLES** |
|---|---|
| EXAMPLE 1 | 1.4 |
| EXAMPLE 2 | 1.6 |
| EXAMPLE 3 | 1.9 |
| COMPARATIVE EXAMPLE | 6.2 |

## Claims

1. A multilayer film having thickness of 50-200 microns, where the film comprises a polyolefin polymer, an outer layer comprising polyamide and an inner layer comprising a blend of ethylene alpha olefin copolymers and polyether copolymers, where the outer layer comprises a blend of two or more polyamides and the outer layer further comprises polyamide based slip and/or polyamide based antiblock additives.

2. The multilayer film according to claim 1, wherein the outer layer comprises polyamide 6.

3. The multilayer film according to claim 1, wherein the outer layer comprises a copolyamide.

4. The multilayer film according to claims 1 to 3, wherein the film comprises an oxygen barrier layer.

5. The multilayer film according to claim 4, wherein the oxygen barrier layer comprises EVOH.

6. The multilayer film according to claims 1 to 5, wherein the film is gusseted.

7. The multilayer film according to the above claims where the outer layer comprises an antistatic additive or polymer.

8. Use of the multilayer film according to claims 1 to 7, as a liner in a flexible intermediate bulk container (FIBC).

9. A FIBC liner comprising a multilayer film according to one of claims 1 to 7.

10. A FIBC comprising a multilayer film according to one of claims 1 to 7 or a FIBC liner according to claim 9.

## Patentansprüche

1. Mehrschichtfolie mit einer Dicke von 50-200 Mikrometern, wobei die Folie folgendes umfasst: ein Polyolefinpolymer, eine äußere Schicht, die Polyamid umfasst, und eine innere Schicht, die eine Mischung aus Ethylen-Alpha-Olefin-Copolymeren und Polyether-Copolymeren umfasst, wobei die äußere Schicht eine Mischung aus zwei oder mehr Polyamiden umfasst und die äußere Schicht ferner Gleitmittel auf Polyamidbasis und/oder Antiblock-Additive auf Polyamidbasis umfasst.

2. Mehrschichtfolie nach Anspruch 1, wobei die äußere Schicht Polyamid 6 umfasst.

3. Mehrschichtfolie nach Anspruch 1, wobei die äußere Schicht ein Copolyamid umfasst.

4. Mehrschichtfolie nach einem der Ansprüche 1 bis 3, wobei die Folie eine Sauerstoffsperrschicht umfasst.

5. Mehrschichtfolie nach Anspruch 4, wobei die Sauerstoffsperrschicht EVOH umfasst.

6. Mehrschichtfolie nach einem der Ansprüche 1 bis 5, **dadurch gekennzeichnet, dass** die Folie mit Seitenfalten versehen ist.

7. Mehrschichtfolie nach einem der vorstehenden Ansprüche, wobei die äußere Schicht ein antistatisches Additiv oder Polymer enthält.

8. Verwendung der Mehrschichtfolie nach einem der Ansprüche 1 bis 7 als Auskleidung in einem flexiblen Schüttgutbehälter (FIBC).

9. FIBC-Auskleidung, umfassend eine Mehrschichtfolie gemäß einem der Ansprüche 1 bis 7.

10. FIBC mit einer Mehrschichtfolie nach einem der Ansprüche 1 bis 7 oder einem FIBC-Liner nach Anspruch 9.

## Revendications

1. Film multicouche ayant une épaisseur de 50 à 200 microns, où le film comprend un polymère de polyoléfine, une couche extérieure comprenant du polyamide et une couche intérieure comprenant un mélange de copolymères d'éthylène alpha oléfine et de copolymères de polyéther, où la couche extérieure comprend un mélange de deux polyamides ou plus et la couche extérieure comprend en outre des additifs de glissement à base de polyamide et/ou des additifs anti-blocage à base de polyamide.

2. Film multicouche selon la revendication 1, dans lequel la couche extérieure comprend du polyamide 6.

3. Film multicouche selon la revendication 1, dans lequel la couche extérieure comprend un copolyamide.

4. Film multicouche selon les revendications 1 à 3, dans lequel le film comprend une couche barrière à l'oxygène.

5. Film multicouche selon la revendication 4, dans lequel la couche barrière à l'oxygène comprend de l'EVOH.

6. Film multicouche selon les revendications 1 à 5, dans lequel le film est à soufflets.

7. Le film multicouche selon les revendications précédentes où la couche extérieure comprend un additif ou un polymère antistatique.

8. Utilisation du film multicouche selon les revendications 1 à 7, comme doublure dans un conteneur intermédiaire souple pour vrac (GRVS).

9. Doublure de GRVS comprenant un film multicouche selon l'une des revendications 1 à 7.

10. GRVS comprenant un film multicouche selon l'une des revendications 1 à 7 ou une doublure de GRVS selon la revendication 9.
